# EUROPEAN PATENT APPLICATION

(11) **EP 4 645 598 A1**
(43) Date of publication of application: **05.11.2025**
(21) Application number: 24173618.0
(22) Date of filing: 30.04.2024
(51) Int. Cl.: H01R 4/20, H01R 43/05, H01R 11/12, H01R 43/28

(54) **METHOD OF PREPARING INSERTION OF AN ELECTRICAL CABLE INTO A CLOSED BARREL CRIMP TERMINAL AND CABLE CONNECTION**

(71) Applicant: Aptiv Technologies AG, 8200 Schaffhausen (CH)
(72) Inventor: SAVINA, Romain, 8200 Schaffhausen (CH); ELMANFALOUT, Abdelaaziz, 8200 Schaffhausen (CH)
(74) Representative: INNOV-GROUP

(57) **Abstract**

A method of preparing a connection for an electrical cable (10) is described in which the insulating sheath of the cable (10) is cut twice to form a central portion (13) between a main portion (11) and a front portion. Subsequently or concurrently with the removal of the front insulation portion (12) from the core electrical conductor (30) thereby exposing at stripped segments (30a,30b) of the electrical conductor strands (30), the central insulation portion (13) is moved away from the first insulation portion (11) but still at a non-zero distance from the exposed free ends (31) of the electrical conductor strands (30). A distal stripped portion (30b) is thus formed on the side of the third insulation portion (13) of the cable (10) remote from said first insulation portion (11), by which the electrical cable (10) can then be inserted into the barrel portion (21) of an electrical closed barrel crimp terminal (20). The central insulation portion (13) is preferably in contact with the inlet (211) of the connector barrel (21), on one side, and in contact with the main insulation portion (11) of the electrical cable (10), on the other side, when the electrical cable (10) is fully inserted into the connector barrel (21), to ensure electrical insulation of the connection. Crimping performance is enhanced, thanks to a relatively high ratio of the core conductor diameter to the barrel diameter.

## Description

### BACKGROUND

### Technical Field

The invention relates generally to the field of electrical connectors and has nonlimiting applications, for example, in the industrial manufacturing of automotive wiring harness, wiring systems for industrial machines or high-performance electronic systems and for marine applications.

It is concerned, more particularly, with a method of preparing a connection for an electrical conductor into a cylindrical crimp terminal, or closed barrel crimp terminal, for easing insertion of a multi-strand wire into the closed barrel of the terminal before crimping.

### Related Art

The approaches described in this section could be pursued, but are not necessarily approaches that have been previously conceived or pursued. Therefore, unless otherwise indicated herein, the approaches described in this section are not prior art to the claims in this application and are not admitted to be prior art by inclusion in this section.

In the automotive industry, for instance, harness systems are mass produced on automated lines. Each wire is cut to length, stripped and crimped into a crimp terminal.

The present disclosure addresses the case of multi-strand cables, i.e. electrical wires with an electric conductor comprising a bundle of individual metal wires surrounded by an insulating sheath.

Tubular (or closed barrel) crimp terminals have a cylindrical shape metal barrel portion. One open end of the barrel portion, or barrel inlet, is where a wire/cable is inserted and crimped. Connectors of that kind come in a variety of shapes and sizes, and some have insulated sleeves, such as nylon or heat-shrink tubing.

Unlike a soldered connection, the multi-strand conductor is connected to the cylinder by the pressure generated by a crimping tool, which cold-welds the cylinder to the conductor strands. Open barrel crimp terminals use a crimping tool that produces a crimp using an F- or B-profile crimping tool, while closed barrel crimp terminals, which feature a closed barrel, use crimping tools that create an indented, polygonal (e.g. hexagonal) or oval crimping profile.

The diameter of the crimping closed barrel must be chosen in relation to the cable diameter, with a good balance. The ratio of closed barrel diameter to cable diameter must be high enough to ensure proper insertion of the strands into the barrel before crimping, but not too high to avoid extreme deformation of the barrel during crimping which may result in the terminal being damaged. In fact, good crimping efficiency is achieved when cable and barrel diameters are very closely matched.

However, it is known that the correct insertion of the stripped part of the end of a multi-strand cable can be problematic compared to the insertion of a monolithic wire, since the strands may be bent or folded and prove difficult to insert all together into the inlet of the barrel portion of the closed barrel connector, which can compromise the connection. There is a need for a method of preparing insertion of a stripped multi-strand electrical conductor in the barrel portion of a closed barrel connector, which limits the risk of damaging the terminal or compromising the connection.

This issue has already been addressed in the prior art regarding open barrel terminals. Open barrel terminals feature a U-shape connection lug having a crimp zone with at least one pair of bendable conductor crimp wings for retaining and securing a conductor of an electrical cable after crimping. Usually, first wings crimp the electrical conductor onto the terminal, while additional wings press the insulation of the electrical cable to relieve tension on the connection, in use.

For instance, reference JP2008235130 A discloses a terminal connection structure for an electric cable in which a plurality of respective core wires (namely strands) protruding from a covering material of the end portion of the electric cable can be connected in a bundled state to a terminal, as well as the terminal connection method associated therewith. An open barrel crimp terminal is mounted on the cable end portion while keeping at least a portion of the coating material of the core wires protruding from the coating material of the wire end portion in a semi-stripped state. The terminal connection method consists in connecting the terminal to be crimped to the terminal portion of the electrical wire of the terminal connection structure, with the coating material being separated from the remainder of the coating material, in a semi-stripped position such that the terminal portion of the core wires is surrounded externally, and the plurality of respective core wires is maintained in the bundled state. In the semi-stripped state, in which the coating material is left at the end of the core wires, the crimp terminal is mounted on the end of the electric wire. According to the teachings of JP2008235130 A, the semi-strip state coating material remaining on the core wires of the electric wire is retained by retaining means, e.g. projections, formed on the terminal connection structure, is brought into contact with said projections and retained: it is stopped in position and is not subsequently moved. In one embodiment, the retaining means is a barrel portion of the terminal for crimping the core wires, and the core wires of the electric wire are crimped together with the covering material in the semi-strip state remaining on the core wires at the barrel portion of the terminal.

Reference EP3425735 A1 discloses a crimp connection terminal wherein, in a conductor crimping portion, side portions are folded into a bottom layer plate and a top layer plate, and edges of said side portions are abutted against each other to form a joint. Additionally, three long groove-like punched long holes, for example, are provided in an oblique direction with respect to a longitudinal direction of the crimp connection terminal in a bottom portion of the top layer plate. A shallow round recessed portion is formed in the surface of the punched long hole by stamping. Edges of this recessed portion and new edges formed by edges of the punched long hole, obtained by the punching, being pushed inward by the stamping are formed in two steps.

Reference US20150244131 A1 discloses a method of preparing a connection for an electrical conductor in view of insertion of the electrical conductor of a barrel portion of a closed barrel connector. An insulation layer of the electrical conductor is cut and the insulation is separated into a first portion and a second portion. The second portion is moved away from the first portion to at least partially expose conductor strands of the electrical conductor. A separate strand retainer, e.g., in an elastomeric material, is placed onto and around the exposed conductor strands. The insulation second portion is removed from the electrical conductor. The exposed conductor strands are inserted into an electrical connector. The strand retainer can be placed onto the electrical conductor (i) prior to the cutting step, (ii) subsequent to the cutting step and prior to the moving step, or (iii) subsequent to the moving step. The strand retainer can be moved from the exposed segment of conductor strands to the insulation first portion as the exposed segment of conductor strands are inserted into the electrical connector. Finally, the strand retainer is removed from the electrical conductor subsequent to the inserting step.

Reference CN111509411 A1 discloses a method of connecting a wire and an OT terminal. The method comprises preparing the wire and the OT terminal to be connected, wherein: the outer sheath at one end of the wire is stripped to expose the conductor; the stripped sheath is moved to the front end of the conductor for cutting, a reserved part sheath being arranged at the front end of the conductor after cutting. This reserved part sheath is configured to be used as a guide block. An insulator having a hollow structure is then arranged at the end, opposite to the wire, of the OT terminal. One end of the insulator is fixed to the OT terminal, and the other end of the insulator extends out of the end of the OT terminal. The wire extends to the insulator, when the conductor moves towards the OT terminal, the guide block is blocked in the insulator, and the front end of the conductor extends out of the guide block, continues to move and extends out of the insulator. The conductor is then crimped to the OT terminal. The adverse phenomenon of reverse folding of the conductor is reduced. However, the proposed solution is workable with insulated connector only, wherein the insulator is used for blocking the guide block upon insertion of the wire. In addition, the precise positioning of the so-called guide block at the front end of the conductor is uneasy to achieve, and appears to be obtained by a dedicated step of cutting the reserved part sheath along with the conductor, which is a significant drawback of the proposed method.

### SUMMARY

The invention aims to remedy all or some of the disadvantages of the above identified prior art.

To address these needs, a first aspect of the proposed solution relates to a method defined by the features as claimed in claim 1.

More precisely, there is proposed a method of preparing a connection for an electrical cable having a longitudinal axis and comprising a core multi-strand electrical conductor surrounded by an insulation sheath, the method comprising the steps of:
- cutting the insulating sheath near one end of the cable to be stripped and inserted into a barrel portion of an electrical closed barrel crimp terminal for connecting said cable to said terminal, to separate said insulation sheath into a first insulation portion, a second insulation portion and a third insulation portion, said third insulation portion lying between said first insulation portion and said second insulation portion along the longitudinal axis of the electrical cable;
- removing the second insulation portion from the core electrical conductor, thereby exposing at least one stripped segment of the electrical conductor strands;
- moving the third insulation portion away from the first insulation portion but still at a non-zero distance from the exposed free ends of the electrical conductor strands, thus separating the stripped segment of the electrical conductor strands into a proximal stripped portion close to said first insulation portion of the cable and a distal stripped portion on the side of the third insulation portion of the cable remote from said first insulation portion; and,
- inserting the electrical cable by the exposed free ends of the distal stripped portion of the electrical conductor strands into the barrel portion of the electrical crimp terminal.

Thanks to these features, the proposed method makes it possible to remedy, or at least significantly mitigate, technical problems such as those mentioned above, encountered with solutions known in the art.

Crimping performance is enhanced, thanks to a relatively high ratio of the core conductor diameter to the barrel diameter. The production efficiency and the crimping stability are improved.

Advantageously, the method can be implemented for both insulated and non-insulated crimp terminals.

The third insulation portion is preferably in contact with the inlet of the connector barre, on one side, and in contact with the main insulation portion of the electrical cable, on the other side, when the electrical cable is fully inserted into the connector barrel, to ensure electrical insulation of the connection.

Further embodiments of the proposed method are defined in the dependent claims.

A second aspect of the present disclosure relates to a cable connection according to claim 9, preferably obtained by implementation of the method according to the above first aspect, with at least one electrical closed barrel crimp terminal and an electrical cable having a longitudinal axis and comprising a core multi-strand electrical conductor surrounded by an insulation sheath, said cable having one end crimped within the barrel portion of the closed barrel crimp terminal, wherein the insulation sheath of the cable comprises a portion cut from a main portion and sandwiched between said main portion of the insulation sheath of the cable on one side, and an inlet of the barrel of the closed barrel crimp terminal, on the other side.

Finally, a third aspect of present disclosure relates to a cable harness according to claim 9, comprising at least one cable connection according to the above second aspect.

### BRIEF DESCRIPTION OF THE DRAWINGS

Embodiments of the present invention are illustrated by way of example, and not by way of limitation, in the figures of the accompanying drawings, in which:
- Fig. 1 is a partially transparent perspective view of a closed-barrel connector fitted to a multi-strand electrical cable.
- Fig. 2 is a detailed view of the insertion of a multi-strand electrical cable into a closed-barrel connector, schematically illustrating the technical problem behind the invention.
- Fig. 3A is a cross-sectional view of a multi-strand cable inside a barrel connector for a first, relatively small ratio of cable diameter to barrel diameter.
- Fig. 3B is a cross-sectional view of the assembly shown in figure 3A after the barrel has been crimped onto the cable.
- Fig. 4A is an axial cross-section view of a multi-strand cable inside a barrel connector for a second, relatively high ratio of cable diameter to barrel diameter.
- Fig. 4B is a cross-sectional view of the assembly shown in figure 4A after the crimping.
- Fig. 5A-Fig. 5F are perspective views which show, in sequence, steps of the preparation method according to embodiments.
- Fig. 6A-Fig. 6C are perspective views which show, in sequence, sub-steps of the insertion of the prepared cable into the barrel portion of a closed barrel terminal, for crimping.

### DESCRIPTION OF PREFERRED EMBODIMENTS

The following figures and description illustrate specific exemplary embodiments of the invention. It is therefore obvious that those skilled in the art will be able to devise various arrangements which, although not explicitly described or illustrated herein, embody the principles of the proposed solution and are included within the scope of the claims. In addition, all examples described herein are intended to facilitate understanding of the principles of the solution and should be construed as not being limited to the examples and provisions specifically disclosed. Accordingly, the scope of the claims is not limited to the specific embodiments or examples described below, but only by the features set forth in the claims and their equivalents.

In the figures of the accompanying drawings, like reference numerals refer to similar elements. In addition, unless specifically stated otherwise, the disclosures contained in the entire description can be applied analogously to the same parts with the same reference signs or the same component identifiers.

In the following description, functions or constructions well-known by the one skilled in the art are not described in detail since they would obscure the description in unnecessary detail.

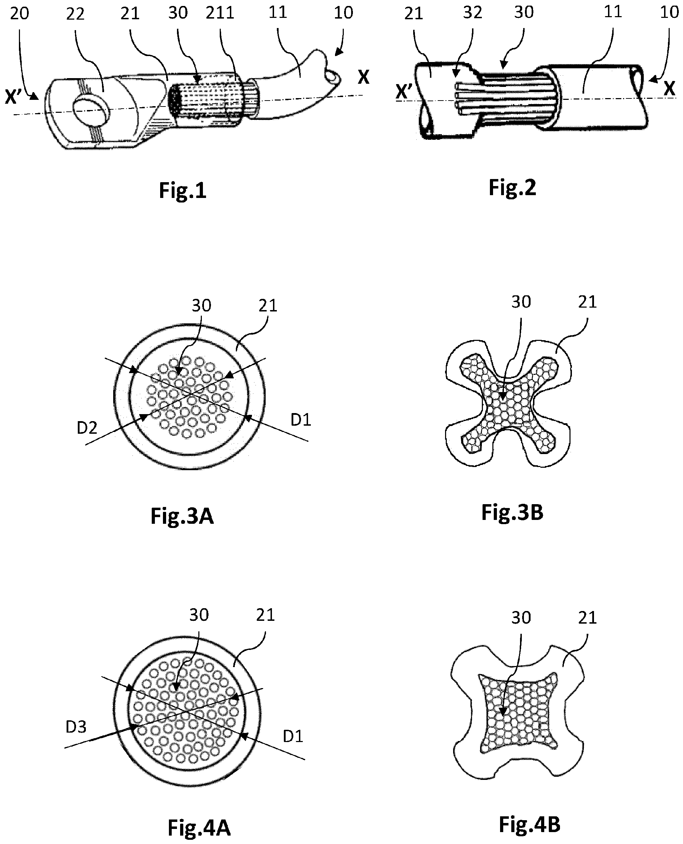

There will be firstly described, with reference to Fig. 1 of the accompanying drawings, the principle of insertion of a stripped end of a multi-strand conductor of an insulated electrical cable into the barrel portion of a closed barrel terminal.

In essence, the electrical cable 10 comprises a central electrical conductor 30 which, in the context of the invention, is a multi-strand conductor. For example, the conductor may be made of copper or steel, preferably stainless steel. In addition, the electrical cable comprises an insulating sheath in an insulating coating material, for example any suitable plastic material such as PVC (polyvinyl chloride), which surrounds the electrical conductor.

In order to make a suitable cable connection, for example as part of the process of manufacturing a wiring harness, the cable is cut to length, and one end of the cable is stripped to expose an end portion of the electrical conductor (namely, of the conductor strands), through which the cable is then to be inserted into the barrel portion 21 of the closed barrel terminal 20 to obtain the arrangement as illustrated in the partially transparent perspective view of Fig. 1.

The other end of the terminal 20 serves as a connection piece, i.e. a connector portion 22, which can be of various types, such as the ring tongue illustrated, which is suitable for attaching a bolt. In embodiments, the closed barrel terminal can be in any electrically conductive material, for instance a metal such as copper, tinned copper, aluminium, etc., or an alloy of these materials.

This connection can be used for earthing or for high-power connections, for example in electric or hybrid vehicles. The person with ordinary skills in the art will appreciate that, particularly to make connections for different purposes, connector portion 22 of the closed barrel terminal 20 can have a different shape, such as a pin, a fork (i.e. two or more pins), a blade or a butt connector.

Finally, the barrel portion 21 of the closed barrel terminal 20 is crimped over the stripped end portion of the electrical conductor 30. Thanks to the transverse deformation of the connector barrel all over its circumference due to crimping, the conductor strands are firmly secured within said barrel, and no additional wings are required to provide a strain relief effect for the connection thus obtained.

However, and with reference to Fig. 2, once the insulation sheath has been removed, in part, by stripping the end portion 30 of the core conductor, some conductor strands protruding from the end portion of the remaining insulation sheath 11 of the electrical cable 10 can bend outwards with respect to the longitudinal axis X-X' of said cable (assuming that cable 21 extends longitudinally along a generally linear direction X-X' as shown). As a result, they can escape from the barrel portion 21 of the closed barrel terminal 20 when the electrical cable 10 is inserted through the inlet 211 of said barrel portion 21 by the free ends of the wire strands 30. In other words, some of the individual core wires (conductor strands 30) tend to protrude outwards from the terminal (core wire spreading), and it is therefore difficult to connect a plurality of core wires constituting the multi-strand conductor while they are imperfectly grouped together.

The skilled person will appreciate that, when inserting the cable 10 into the barrel portion 21 of the closed barrel terminal 20, the cable 20 is aligned with the longitudinal direction of said terminal 20. As the embodiments relate to the insertion of the cable 10 into the terminal 20 (and more particularly to its preparation), the terms " longitudinal axis X-X' " will be used in the remainder of this description and in the drawings to designate both to the longitudinal direction of extension of the cable 10, on the one hand, and to the longitudinal axis of terminal 10, on the other.

Further, in the context of the present description, and by way of convention, terms like "rear" and "front", "behind" and "ahead", "back (or rear) side" and "front side", "backward" and "forward", and derivatives such as "in (the) front of", an "in the rear of' as well as associated verbs and derived nouns or expressions, are used herein in reference to the direction of insertion of the terminals into the closed barrel terminal 20, through the inlet 211 of its barrel portion 21, along the longitudinal axis X-X' of said terminal 20.

Fig. 3A and Fig. 4A illustrate, in respective cross-sectional views (i.e. in a cross-section transverse to the longitudinal axis X-X' of terminal 20), an assembly comprising core wire strands 30 of the stripped end-portion of a multi-strand cable in place in a barrel portion 21 of the terminal, for a relatively low or relatively high cable diameter to barrel diameter ratio, respectively.

The assembly shown in Fig. 3A, i.e. with a relatively small cable diameter to barrel diameter ratio, favours proper strand insertion into the barrel portion 21 of the barrel terminal 20 before the crimping operation. Indeed, it reduces the risk of individual wire strands of the core conductor 30 extending outside the barrel portion 21 when the stripped end portion of the cable 10 is inserted into said barrel portion 21 as discussed above with reference to Fig. 2. Nevertheless, this assembly has relatively low crimp performance.

As shown in Fig. 3B, indeed, the transverse deformation of the barrel due to crimping, for example when an automatic 4-indentation crimping tool presses the barrel portion 21 of the closed barrel 20 with the multi-strand conductor 30 inside, is potentially too great. The result is a risk of cracking the crimped barrel 21.

Figure 4A is similar to Fig. 3A presented above, but for a relatively high cable diameter to barrel diameter ratio. In such a case, as shown, the diameter of the bundle of strands forming the core conductor 30 of the cable 10 can be close, by lesser values, to the inner diameter of the barrel portion 21 of the closed barrel terminal 20. This is favourable to good crimping performance.

As illustrated in Fig.4B, indeed, transverse deformation of barrel portion 21 is limited to what is necessary to press the individual wire strands 30 together and firmly secure the crimped barrel 21 to these strands. The risk of cracking the crimped barrel is low.

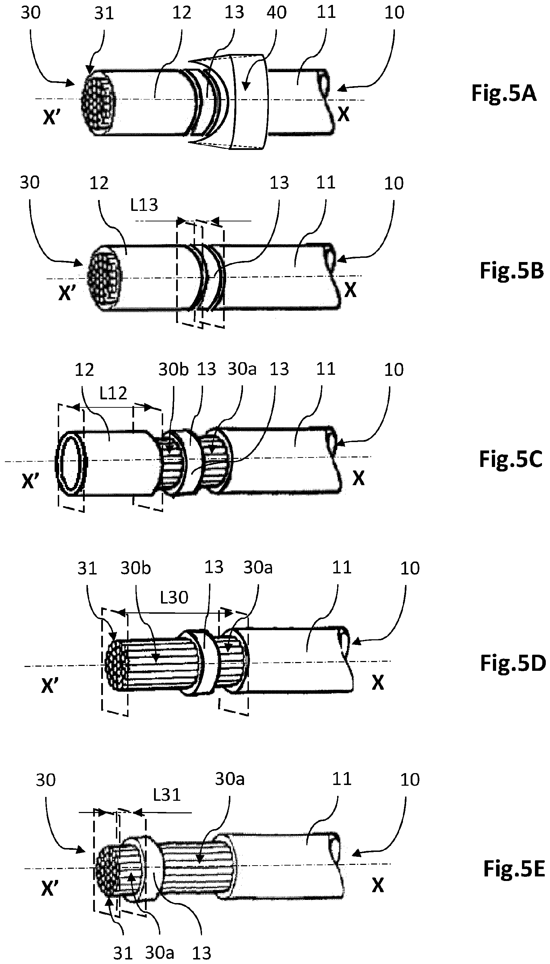

The steps of the proposed method for preparing the electrical cable for insertion into the barrel of a closed barrel terminal according to the embodiments will now be described with reference to the series of drawings in Figs. 5A to Fig. 5E.

Fig. 5A schematically illustrates a step for cutting the insulating sheath of electrical cable 10 (but not the core conductor 30 inside said insulating sheath), with a view to stripping an end portion of said cable. For this purpose, the term "cutting" refers to the making of an annular groove along the circumference of the insulating sheath only, i.e. to a depth corresponding to the axial thickness of said sheath, and not deeper in order not to preserve the integrity of the conductor strands 30.

This first step comprises cutting the insulating sheath 10 near one end of the cable to be stripped and inserted into a barrel portion 21 of a closed barrel electrical terminal 20 for connecting said cable to said terminal, to separate said insulation sheath into a first portion 11, a second portion 12 and a third portion 13, said third insulation portion 13 lying between said first insulation portion 11 and said second insulation portion 12 along the longitudinal axis X-X' of the electrical cable 10;

In some embodiments, the step of cutting the insulating sheath 10 comprises two successive cutting operations to separate said insulation sheath into the first insulation portion 11, the second insulation portion 12 and the third insulation portion 13. This can be achieved using a standard cutting tool that comprise a single set of cutting blades (not visible in the figure) arranged in one and the same transverse plane and configured to perform a single cut all around the circumference of the insulation sheath of cable 10. After a first cut has been performed, the cutting tool is moved along the axial direction X-X' into another transverse plane, and a second circumferential cut is performed, at a defined axial distance from the first cut.

With reference more specifically to Fig. 5B which shows the electrical cable after performance of the two circumferential cuts:
- a first portion 11 of the insulation sheath which is behind the two cuts thus performed, is referred to as the rear (or main, or remaining) insulation portion,
- the second portion 12 of the insulation sheath which is ahead of the two cuts is referred to as the front insulation portion or the stripped insulation portion, and,
- the third portion 13 of the insulation sheath, which is formed between the two cuts and thus lies between the first insulation portion 11 and the second insulation portion 12, is referred to as the central portion of the insulation sheath or the strand-retaining portion. As will be apparent, indeed, the function of the central portion 13 of the insulation sheath is to securely hold together the individual wires of the stripped end portion of cable 10, once the front portion 12 of the insulation sheath has been removed to expose said wires.

In other embodiments, the step of cutting the insulation sheath of cable 10 comprises a single double-cutting operation to separate the insulation sheath into the main insulation part 11, the front insulation part 12 and the central insulation part 13 simultaneously. This operation can be performed using a single cutting tool having two sets of cutting blades, permanently arranged in respective transverse cutting planes. The axial distance between these two sets of blades defines the axial length of the third insulation part 13. This ensures that the axial length of the third insulation 13 is precise and constant from one processed cable to the next. Compared to the first embodiments described above, however, a dedicated cutting tool is required and may have to be replaced by another dedicated cutting tool when several types of cable and/or other closed barrel terminals of varying diameters are to be processed on the same machine, in order to obtain a central portion of the insulation sheath with a different axial length.

Fig. 5C illustrates the step of removing the front insulation portion 12 of the outer sheath 11 from electrically conducting wire strands 30 of the cable 10 thereby exposing said conductor strands 30.

After removing the front part 12 of the insulation sheath from the electrical conductor 30, at least one stripped segment and possibly two stripped segments 30a and 30b of the strands of the electrical conductor 30 are exposed. These stripped segments 30a and 30b are separated, along the longitudinal axis X-X', by the central portion 13 of the insulation sheath of the cable 10, which is not removed and will never be removed with the proposed method. The respective axial lengths of the stripped segments 30a and 30b depend on the axial position of the central part 13 of the insulation sheath. It will be appreciated that, if the central part 13 of the insulating sheath is always in abutment with its main part 11, the axial length of segment 30a is zero (i.e. there is no segment 30a), and that the other segment 30b, which is in fact the only stripped segment, then has its maximum possible length.

The next step is moving the third insulation portion 13 away from the first insulation portion 11, but still at a (non-zero) distance from the exposed free ends of the electrical conductor strands 30, namely the distal ends of said strands ahead. As a result, the stripped segment of the electrical conductor strands are now clearly separated into a proximal stripped portion 30a which is close to the main insulation portion 11 of the cable sheath, and a distal stripped portion 30b on the side of the central insulation portion 13 remote from said main insulation portion 11 of the cable 10.

As illustrated schematically in Figure 5C, the forward displacement of the central insulating section 13 can be carried out at least in part at the same time as the removal of the front insulating section 12. In a variant, it can be carried out subsequent to said removal.

In any case, the configuration of the electrical cable 10 after completion of the preparation for insertion inside the barrel portion of a closed barrel terminal is the configuration as shown in Fig. 5E.

With reference to Fig. 5B, the axial length L13 of the third insulation portion 13 of the insulation sheath of cable 10 is in the range, for example, from 1 mm to 2 mm. With similar reference to Fig. 5C, the axial length L12 of the second insulation portion 12 of the insulation sheath of cable 10 is in the range, for example, from 3 mm to 15 mm.

With reference now to Fig. 5D, the total axial length L30 of the stripped portion of the cable 10 is the sum of the axial length L12 of the second insulation portion 12 and the axial length L13 of the third insulation portion 13. State otherwise, L30 is equal to L12 plus L13 (L30 = L12+L13).

Finally, and with reference to Fig. 5E, the axial length L31 of the distal stripped portion 30b of the electrical conductor is in the range from 1 mm to 3 mm.

In some embodiments, the axial length L31 of the distal stripped portion 30b of the electrical conductor can be proportional to the axial length L13 of the third insulation portion 13 of the electrical cable 10. For instance, L31 can be equal to *k* times L13, where k is a factor greater than unity. In some embodiments, k is in a range, for example, from 1 to 3 (k=1 not included), preferably from 1.5 to 2.

One will appreciate that embodiments are not intended to be limited to the above examples.

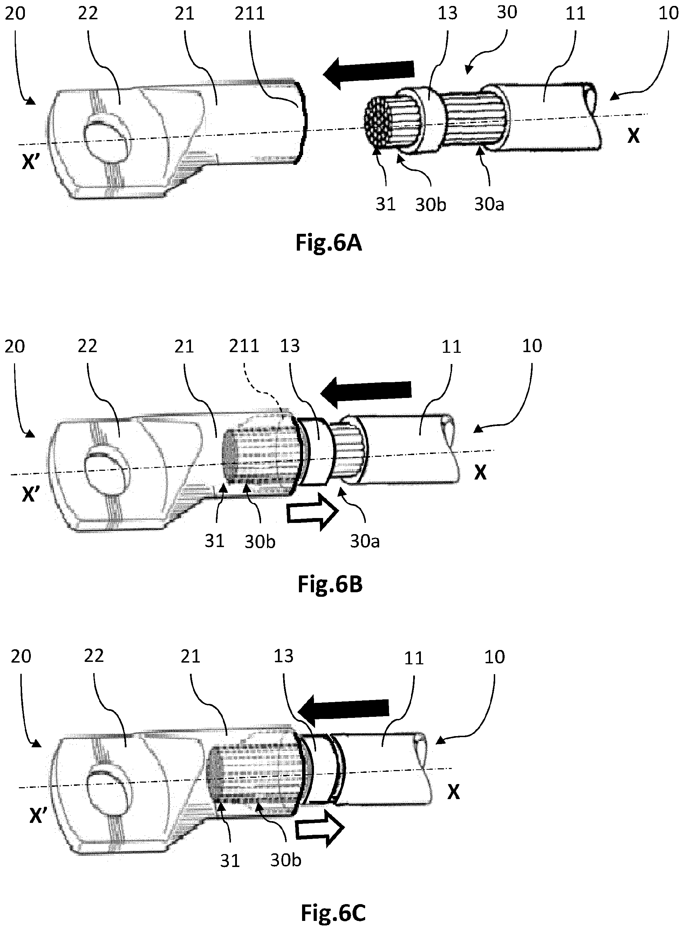

With reference to Fig. 6A to Fig. 6C, the process of inserting the stripped end portion of the cable into the barrel portion of the crimp terminal will now be described.

This process takes place after the electrical cable has been prepared according to the method explained above with reference to Figures 5A-5F. After such preparation, indeed, the electrical cable 10 and more specifically the end portion thereof which is intended to be connected to the closed barrel terminal 20 is ready to be inserted by the exposed free ends 31 of the electrical conductor strands 30 into the terminal portion 21 of said electrical terminal 20.

As illustrated in Fig. 6A by a horizontal black arrow, the stripped end portion of the cable 10 is brought close to the inlet 211 (rear opening) of the barrel portion 21 of the terminal 20, and the longitudinal axis of the cable is aligned with the longitudinal axis of the barrel 21 (both axis being represented as common axis X-X' in the figures). The free ends 31 of the bundled copper strands, which are retained tight together by the central portion 13 of the cable sheath, are inserted into the barrel 21 though its rear opening 211.

As shown in Fig. 6B, thanks to the retaining effect of the central portion 13 of the cable sheath acting as a retaining ring, any bending of wire strands 30 is avoided during insertion.

Further, and once the cable 10 has entered the closed barrel 21 of the terminal 20 by a length which corresponds to the axial length L31 of the front ends 31 of the distal stripped portion 30a of the conductor strands, the central portion 13 of the cable sheath abuts the inlet 211 of the barrel portion 21 of the closed barrel terminal 20.

As illustrated in Fig. 6B and Fig. 6C by a white arrow (pointing from left to right in these figures), during the relative movement of the cable end in the barrel portion 21 of the crimp terminal 20, the retaining ring 13 is pushed backwards in the opposite direction to the movement of the cable, the latter being illustrated in the figures by the black arrow (pointing from right to left in these figures). Stated otherwise, once the retaining ring formed by the central part 13 of the cable sheath comes in abutment with the inlet 211 of the barrel portion 21 of the crimp terminal 20, it slides backwards along the stripped conductor strands 30 towards the main part 11 of said cable sheath, as illustrated in the figures by the white arrow, while the insertion of the electric cable 10 in the terminal 20 is continued further as illustrated in the figures by the black arrow. In still other words, the method comprises moving back the third insulation portion 13 farther away from the exposed free ends 31 of the electrical conductor strands 30 toward the first insulation portion 11 of the cable sheath, as the stripped portion of the electrical cable 10 is fully inserted into the connector barrel 21 of the electrical crimp terminal 20.

Advantageously, the third insulation portion 13 can be in contact with the inlet 211 of the connector barrel 21 of the electrical connector 20, on one side, and in contact with the first insulation portion 11 of the electrical cable 10, on the other side, when said electrical cable 10 has been fully inserted into the connector barrel 21 of the electrical connector 20. For example, this occurs at the latest when the exposed free ends 31 of the electrical conductor strands 30 come in contact with the axial bottom of the closed barrel 21 of the electrical crimp connector 20. In this final configuration, as shown in Fig. 6C, there is no proximal stripped portion 30a of the conductor stands 30 anymore, and the distal stripped portion 30b of said conductor stands 30 is entirely contained within the barrel portion 21 of the electrical closed barrel crimp terminal 20. That way, proper insulation of the cable connection thus obtained is ensured.

Thanks to the use of an electrical cable prepared by the method according to embodiments as described in the foregoing, more efficient and more reliable cable connections can be made. Thus, good quality cable harnesses including at least one such cable connection can be manufactured on an industrial scale using automated machines.

Indeed, it is to be noted that providing the stripped portion 30a,30b of the core conductor strands 30 of the electrical cable 10 with a retaining ring (or ring retainer) formed by the so-called central insulation portion 13 cut from the insulation sheath of the cable facilitates the insertion of the cable into the barrel 21 of a closed barrel crimp terminal 20, compared to a stripped end wherein the strands may be curved or bent and thus prove difficult to insert into the barrel portion 21.

However, the one with ordinary skills in the art will appreciate that, contrary to the so-called "guide block" formed by a reserved part of the cable outer sheath and which is specifically arranged at the front end of the conductor after cutting as taught in prior art reference CN111509411 A1 which has been identified and briefly discussed in the introductory part of the present description, the retaining ring formed by the central portion 13 of the insulation sheath of the electrical cable 10 as per embodiments has no guiding function. Applying the teachings of CN111509411 A1 to a context in which the crimp terminal is not necessarily an insulated crimp terminal, would lead to the "retaining ring" disclosed herein entering the cylindrical part 21 of the crimp terminal 20, so as to provide a guiding effect for cable insertion. However, this would mean that the ratio of cable diameter to cylinder diameter would be relatively small, compared with what it can be when the embodiments of the proposed method are implemented. As previously indicated, particularly with reference to Figures 3A-3B and 4A-4B, this ratio would not be optimal in terms of crimping performance and efficiency.

It should also be noted that, while the methods described above enable a stripped end of an electrical cable to be effectively inserted into an uninsulated closed-barrel crimp terminal, there is nothing to prevent the addition of insulation to the cable connection, such as heat-shrink tubing, after crimping.

While there has been illustrated and described what are presently considered to be the preferred embodiments of the present invention, it will be understood by those skilled in the art that various other modifications may be made, and equivalents may be substituted, without departing from the true scope of the claims. Additionally, many modifications may be made to adapt a particular situation to the teachings of the present disclosure without departing from the central inventive concept described herein. Furthermore, an embodiment of the present invention may not include all of the features described above. Therefore, it is intended that the proposed solution be not limited to the particular embodiments disclosed, but includes all embodiments falling within the scope of the appended claims.

A person skilled in the art will readily appreciate that various parameters disclosed in the description may be modified and that various embodiments disclosed and/or claimed may be combined without departing from the scope of the solution as claimed.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed in be a reference to the plural and vice versa. Finally, it is stipulated that the reference signs in the claims do not limit the scope of the claims but are merely inserted to enhance the legibility of said claims.

## Claims

1. A method of preparing a connection for an electrical cable (10) having a longitudinal axis (X-X') and comprising a core multi-strand electrical conductor (30) surrounded by an insulation sheath (11,12,13), the method comprising the steps of:
- cutting the insulating sheath near one end of the cable (10) to be stripped and inserted into a barrel portion (21) of an electrical closed barrel crimp terminal (20) for connecting said cable (10) to said terminal (20), to separate said insulation sheath into a first insulation portion (11), a second insulation portion (12) and a third insulation portion (13), said third insulation portion (13) lying between said first insulation portion (11) and said second insulation portion (12) along the longitudinal axis (X-X') of the electrical cable (10);
- removing the second insulation portion (12) from the core electrical conductor (30), thereby exposing at least one stripped segment (30a,30b) of the electrical conductor strands (30);
- moving the third insulation portion (13) away from the first insulation portion (11) but still at a non-zero distance from the exposed free ends (31) of the electrical conductor strands (30), thus separating the stripped segment (30a,30b) of the electrical conductor strands (30) into a proximal stripped portion (30a) close to said first insulation portion (11) of the cable (10) and a distal stripped portion (30b) on the side of the third insulation portion (13) of the cable (10) remote from said first insulation portion (11); and,
- inserting the electrical cable (10) by the exposed free ends (31) of the distal stripped portion (30b) of the electrical conductor strands (30) into the barrel portion (21) of the electrical crimp terminal (20).

2. The method of claim 1, wherein the step of cutting the insulating sheath (10) comprises two successive cutting operations to separate said insulation sheath into the first insulation portion (11), the second insulation portion (12) and the third insulation portion (13).

3. The method of claim 1, wherein the step of cutting the insulation sheath (10) comprises a single double cutting operation to separate said insulation sheath into the first insulation portion (11), the second insulation portion (12) and the third insulation portion (13).

4. The method of any one of claims 1 to 3, further comprising moving back the third insulation portion (13) toward the first insulation portion (11) as the stripped portion the electrical cable (10) is fully inserted into the barrel portion (21) of the crimp terminal (20).

5. Method of claim 4, wherein the third insulation portion (13) is in contact with the inlet (211) of the barrel portion (21) of the crimp terminal (20), on one side, and in contact with the first insulation portion (11) of the electrical cable (10), on the other side, when said electrical cable (10) is fully inserted into the barrel portion (21) of the crimp terminal (20), for example at the latest when the exposed free ends (31) of the electrical conductor strands are in contact with the axial bottom of the barrel portion (21) of the electrical closed barrel crimp terminal (20).

6. Method of any one of claims 1 to 5, wherein the axial length (L13) of the third insulation portion (13) is in the range from 1 mm to 2 mm.

7. Method of any one of claims 1 to 6, wherein the axial length (L31) of the distal stripped portion (30b) of the electrical conductor is in the range from 1 mm to 3 mm.

8. Method of any one of claims 1 to 6, wherein the axial length (L31) of the distal stripped portion (30b) of the electrical conductor is equal to k times the axial length (L13) of the third insulation portion (13) of the electrical cable (10), where k is a factor greater than unity, in a range from 1 to 3, preferably from 1.5 to 2.

9. Cable connection preferably obtained by implementation of the method according to any one of claims 1 to 8, including at least one electrical closed barrel crimp terminal (20) and an electrical cable (10) having a longitudinal axis and comprising a core multi-strand electrical conductor (30) surrounded by an insulation sheath, said cable having one end crimped within a barrel portion of the crimp terminal, wherein the insulation sheath of the cable comprises a portion (13) cut from a main portion (11) of the insulation sheath and sandwiched between said main portion (11) of the insulation sheath of the cable on one side, and an inlet (211) of the barrel (21) of the crimp terminal (20), on the other side.

10. Cable harness comprising at least one cable connection (10,20) as defined in claim 9.
